(19) Europäisches Patentamt
European Patent Office
Office européen des brevets

(11) **EP 4 431 635 B1**

(12) **EUROPEAN PATENT SPECIFICATION**

(45) Date of publication and mention
of the grant of the patent:
**08.04.2026 Bulletin 2026/15**

(21) Application number: **22918695.2**

(22) Date of filing: **21.09.2022**

(51) International Patent Classification (IPC):
***C23C 28/00*** (2006.01)     ***C10M 169/04*** (2006.01)

(52) Cooperative Patent Classification (CPC):
**B05D 7/14; C08L 91/06; C09D 7/65; C09D 191/06;**
**C10M 169/04; C23C 2/06; C23C 28/00; C25D 3/22;**
C09D 133/064; C10M 2205/14; C10M 2205/16;
C10M 2209/0625; C10M 2209/0845;
C10M 2209/1013; C10M 2209/1023;     (Cont.)

(86) International application number:
**PCT/JP2022/035046**

(87) International publication number:
**WO 2023/132106 (13.07.2023 Gazette 2023/28)**

(54) **LUBRICANT-COATED GALVANIZED STEEL SHEET AND METHOD FOR PRODUCING THE SAME**

MIT SCHMIERFILM BESCHICHTETES VERZINKTES STAHLBLECH UND VERFAHREN ZUR HERSTELLUNG DAVON

FEUILLE D'ACIER PLAQUÉE DE ZINC REVÊTUE D'UN FILM LUBRIFIANT ET SON PROCÉDÉ DE FABRICATION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **04.01.2022 JP 2022000108**

(43) Date of publication of application:
**18.09.2024 Bulletin 2024/38**

(73) Proprietor: **JFE Steel Corporation**
**Tokyo 100-0011 (JP)**

(72) Inventors:
• **FURUYA Shinichi**
**Tokyo 100-0011 (JP)**
• **AOYAMA Tomohiro**
**Tokyo 100-0011 (JP)**
• **KOIBUCHI Shun**
**Tokyo 100-0011 (JP)**
• **MATSUDA Takeshi**
**Tokyo 100-0011 (JP)**

(74) Representative: **Hoffmann Eitle**
**Patent- und Rechtsanwälte PartmbB**
**Arabellastraße 30**
**81925 München (DE)**

(56) References cited:
**WO-A1-2012/133671       WO-A1-2012/133671**
**JP-A- 2006 022 363       JP-A- 2010 121 198**
**US-A1- 2014 023 879**

(52) Cooperative Patent Classification (CPC): (Cont.)
C10N 2020/06; C10N 2030/06; C10N 2040/24;
C10N 2050/025

## Description

Technical Field

The present invention relates to a lubricant-coated galvanized steel sheet that excels in slidability at press forming and to a method for producing such a steel sheet. In particular, the present invention relates to a lubricant-coated galvanized steel sheet with a lubricant film that exhibits excellent formability even under severe drawing conditions, and to a method for producing such a steel sheet.

Background Art

Galvanized steel sheets are widely used in a broad range of fields mainly based on automobile bodies. Galvanized steel sheets are usually used after being press formed. However, galvanized steel sheets are disadvantageously poor in press formability compared to cold rolled steel sheets because galvanized steel sheets exhibit higher sliding resistance with respect to a press die than cold rolled steel sheets. Specifically, high sliding resistance with respect to a die occurs at a bead, and this portion brakes the flow of the high-sliding resistance galvanized steel sheet into the press die, with the result that the steel sheet is likely to be fractured.

An approach widely used to enhance the press formability of galvanized steel sheets is to apply a high-viscosity lubricating oil. However, the high viscosity of the lubricating oil makes degreasing insufficient and consequently leads to paint defects in the painting step. Furthermore, for example, the press performance is destabilized due to the oil being exhausted during pressing. Thus, there are demands for improvements in the press formability of galvanized steel sheets themselves.

Various lubricating surface treatments on steel sheets have been studied to solve the above problems.

Patent Literature 1 describes a metal sheet that is coated with a lubricant film in which a solid lubricant protrudes 0.01 to 1.5 μm from the surface of a resin film.

Patent Literature 2 describes a surface-lubricated metal article with excellent press formability that is coated with a 0.5 to 5 μm film with a polyurethane resin containing a lubricant.

Patent Literature 3 describes a technique in which an alkali-soluble organic film containing an epoxy resin and a lubricant is formed on a steel sheet.

Patent Literature 4 discloses a lubricant coated galvanized steel sheet with a zinc layer as the lower layer that is coated with an upper lubricant layer comprising an organic resin and a polyolefin wax.

Citation List

Patent Literature

PTL 1: Japanese Unexamined Patent Application Publication No. 10-52881
PTL 2: Japanese Unexamined Patent Application Publication No. 2000-309747
PTL 3: Japanese Unexamined Patent Application Publication No. 2000-167981
PTL 4: US2014/023879 A1

Summary of Invention

Technical Problem

Although Patent Literatures 1 to 4 offers lubricity by the lubricating effect of, for example, the lubricant that is contained, the press formability is not necessarily sufficient when the forming is complicated. In particular, the techniques are incapable of achieving good press formability stably when the surface roughness changes from steel sheet to steel sheet.

The present invention has been made in view of the circumstances discussed above. It is therefore an object of the present invention to provide a lubricant-coated galvanized steel sheet, specifically, a galvanized steel sheet to be subjected to complicated and difficult press forming that has a lubricant film which imparts low sliding resistance to a portion of the steel sheet at a risk of cracking during press forming, imparts excellent press formability to a portion of the steel sheet where a high contact pressure is applied and thus die galling is expected to occur, and, in particular, realizes excellent press formability over a wide range of surface roughness of steel sheets. Another object of the present invention is to provide a method for producing such a steel sheet.

Steel sheets used for automobiles are required to be sufficiently cleaned of a lubricant film in an alkaline degreasing step during a painting process. It is a further object of the present invention that the lubricant-coated galvanized steel sheet used for such an application also has good film removability.

Here, the galvanized steel sheet is a steel sheet on which a zinc-based coating film is formed. The zinc-based coating film may be a zinc plating that consists of zinc and incidental impurities without any components intentionally added other than zinc, or may be a zinc plating that is based on zinc and contains alloying elements, such as iron, nickel, aluminum, and magnesium, and compounds, such as alumina and silica.

Solution to Problem

The present inventors carried out intensive studies directed to solving the problems described above. As a result, the present inventors have found that the press formability can be dramatically improved and the above problems can be solved by forming, on top of a surface of a galvanized steel sheet having a metallic zinc layer with a coating weight of 5 g/m$^2$ or more on a steel sheet, an organic resin film containing a polyolefin wax with a melting point of 120°C or above and 140°C or below and an average particle size of 3.0 $\mu$m or less while controlling the surface roughness of the steel sheet and the coating weight of the film.

The present invention has been completed based on the above finding. The gist of the present invention is as follows.

[1] A lubricant-coated galvanized steel sheet having, on at least one side thereof, a metallic zinc layer as a lower layer with a coating weight of 5 g/m$^2$ or more, and a lubricant film as an upper layer including an organic resin and a wax, wherein the organic resin is at least one selected from acrylic resins, epoxy resins, urethane resins, phenolic resins, vinyl acetate resins, and polyester resins, the wax is a polyolefin wax having a melting point of 120°C or above and 140°C or below and an average particle size of 3.0 $\mu$m or less, the fraction of the wax in the film is 10 mass% or more, and the lubricant-coated galvanized steel sheet satisfies a relationship of formula (1) below where W is the coating weight (g/m$^2$) of the film per side and Ra is the arithmetic average roughness ($\mu$m) of the surface of the metallic zinc layer,

$$W \geq 0.12 \times Ra^2 + 0.1 \cdots (1).$$

[2] The lubricant-coated galvanized steel sheet according to [1], wherein the coating weight W (g/m$^2$) of the film per side and the arithmetic average roughness Ra ($\mu$m) of the surface of the metallic zinc layer satisfy a relationship of formula (2) below:

$$W \geq 0.25 \times Ra^2 + 0.1 \cdots (2).$$

[3] The lubricant-coated galvanized steel sheet according to [1] or [2], wherein the coating weight W of the film per side is 2.0 g/m$^2$ or less.

[4] The lubricant-coated galvanized steel sheet according to any one of [1] to [3], wherein the arithmetic average roughness Ra of the surface of the metallic zinc layer is 0.4 $\mu$m or more and 2.5 $\mu$m or less.

[5] The lubricant-coated galvanized steel sheet according to any one of [1] to [4], wherein the average particle size of the wax is 0.01 $\mu$m or more and 0.5 $\mu$m or less.

[6] The lubricant-coated galvanized steel sheet according to any one of [1] to [5], wherein the fraction of the wax in the film is less than 50 mass%.

[7] The lubricant-coated galvanized steel sheet according to any one of [3] to [6], wherein the coating weight W of the film per side is 0.9 g/m$^2$ or less.

[8] The lubricant-coated galvanized steel sheet according to any one of [1] to [7], wherein the organic resin is an alkali-soluble resin.

[9] A method for producing the lubricant-coated galvanized steel sheet described in any one of [1] to [8], including applying a paint including the organic resin and the wax described in any one of [1] to [8] to at least one side of a galvanized steel sheet, and drying the paint.

[10] The method for producing the lubricant-coated galvanized steel sheet according to [9], wherein the maximum temperature of the steel sheet reached during the drying is 60°C or above and 140°C or below.

[11] The method for producing the lubricant-coated galvanized steel sheet according to [9] or [10], wherein the fraction of the organic resin and the wax in the paint is 1 mass% or more and 25 mass% or less.

[12] The method for producing the lubricant-coated galvanized steel sheet according to any one of [9] to [11], which further includes a step in which when the formula (1) is not satisfied, at least one of the coating weight W (g/m$^2$) or the

arithmetic average roughness Ra ($\mu$m) of the surface of the metallic zinc layer is altered so as to satisfy the formula (1).

In the present invention, the metallic zinc layer is a coated layer formed on a steel sheet, such as a cold rolled steel sheet or a hot rolled steel sheet, and the galvanized steel sheet is a steel sheet, such as a cold rolled steel sheet or a hot rolled steel sheet, having such a metallic zinc layer thereon.

Advantageous Effects of Invention

The lubricant-coated galvanized steel sheet obtained according to the present invention is a galvanized steel sheet that has a markedly low coefficient of friction with respect to a die or the like and thus exhibits excellent press formability. Thus, the present invention stably realizes excellent press formability when applied to a galvanized steel sheet with relatively low strength that will be subjected to complicated forming.

Even when the galvanized steel sheet is a high-strength galvanized steel sheet that is subjected to a high contact pressure during press forming, the inventive lubricant film can impart low sliding resistance to a portion of the steel sheet at a risk of cracking during press forming, and can impart excellent press formability to a portion of the steel sheet where a high contact pressure is applied and thus die galling is expected to occur.

The term high-strength mentioned above assumes that the tensile strength (TS) is 440 MPa or more, and the term relatively low strength assumes that the TS is less than 440 MPa.

Brief Description of Drawings

[Fig. 1] Fig. 1 is a schematic front view illustrating a friction coefficient measuring device.

[Fig. 2] Fig. 2 is a schematic perspective view illustrating the shape and the dimensions of the bead in Fig. 1.

[Fig. 3] Fig. 3 is a graph illustrating coefficients of friction of various lubricant-coated galvanized steel sheets treated with paints falling within the scope of the present invention, in relation to the surface roughness and the film thickness.

[Fig. 4] Fig. 4 is a graph illustrating coefficients of friction of various lubricant-coated galvanized steel sheets treated with paints falling outside the scope of the present invention, in relation to the surface roughness and the film thickness.

Description of Embodiments

Embodiments of the present invention will be described below.

A lubricant-coated galvanized steel sheet of the present invention has, on at least one side thereof, a metallic zinc layer as a lower layer with a coating weight of 5 g/m$^2$ or more, and a film as an upper layer including an organic resin and a wax. The wax is a polyolefin wax having a melting point of 120°C or above and 140°C or below and an average particle size of 3.0 $\mu$m or less. The fraction of the wax in the film is 10 mass% or more. Furthermore, the lubricant-coated galvanized steel sheet satisfies a relationship of formula (1) below where W is the coating weight (g/m$^2$) of the film per side and Ra is the arithmetic average roughness ($\mu$m) of the surface of the metallic zinc layer.

$$W \geq 0.12 \times Ra^2 + 0.1 \cdots (1)$$

The metallic zinc layer in the present invention may be produced by any method without limitation and may be formed by, for example, galvanizing a steel sheet using such a production technique as hot-dip plating, electroplating, deposition plating, or thermal spraying. A galvannealed steel sheet in which the galvanizing treatment is followed by alloying treatment may also be used. Furthermore, the metallic zinc layer in the galvanized steel sheet containing a metal other than zinc, such as a zinc-aluminum alloy plating, a zinc-aluminum-magnesium alloy plating, or a zinc-nickel alloy plating may be used, as long as the coating weight of metallic zinc is 5 g/m$^2$ or more. The metallic zinc layer present under the organic lubricant film promotes the adhesion between a die and the wax component in the organic lubricant film during sliding and helps the wax component coat the die, thus achieving superior lubricating effects compared to when the metallic zinc layer is absent. Because the metallic zinc layer is softer than the steel sheet, its deformation resistance during sliding is low and the coefficient of friction tends to be low. If the coating weight of the metallic zinc layer is less than 5 g/m$^2$, the aforementioned lubricating effects of the zinc layer may not be obtained sufficiently, and the corrosion resistance is lowered.

The wax used in the present invention is only required to be a polyolefin wax having a melting point of 120°C or above and 140°C or below and an average particle size of 3.0 $\mu$m or less. Other characteristics are not particularly limited.

The reason why the polyolefin wax is used as the wax is because it is low in surface energy and has self-lubricating properties to offer good lubricity. Furthermore, the melting point of the polyolefin may be controlled to 120°C or above and 140°C or below relatively easily by controlling the density or the molecular weight.

By virtue of the melting point being 120°C or above and 140°C or below, the polyolefin wax not only exhibits self-lubricating properties of the wax itself but also is semi-melted by sliding during press forming and is mixed together with the organic resin to form a lubricant film component, which coats the die surface and keeps the steel sheet away from direct contact with the die to achieve excellent lubricating effects. If the melting point is below 120°C, the wax is completely melted by the frictional heat produced by sliding during press forming, and fails to offer its lubricating effects sufficiently and also fails to coat the die effectively. If the melting point is above 140°C, the wax is not melted during sliding, and fails to offer sufficient lubricating effects and also fails to coat the die effectively.

When the melting point of the wax is 120°C or above and 140°C or below, it is probable that the wax in the film adheres efficiently to and is persistent on the die during a sliding motion at the time of press forming, thus offering high lubricating effects. If the melting point is below 120°C, the film that has transferred to the die exhibits such low adhesion that the film comes off easily when slid. If the melting point is above 140°C, the film will not transfer to the die efficiently. It is preferable that the melting point be 125°C or above and 135°C or below.

Here, the melting point of the wax is the melting temperature measured based on JIS K 7121: 1987 "Testing Methods for Transition Temperatures of Plastics".

If the average particle size of the wax exceeds 3.0 μm, the wax is less miscible with the organic resin during sliding, and fails to coat the die effectively and does not offer sufficient lubricity. The average particle size of the wax is preferably 1.5 μm or less. The average particle size of the wax is more preferably 0.5 μm or less, and still more preferably 0.3 μm or less.

The average particle size of the wax is preferably 0.01 μm or more. If the average particle size is less than 0.01 μm, the wax tends to be dissolved into a lubricating oil during sliding and sometimes fails to produce sufficient effects in lubricity enhancement. Furthermore, such a wax tends to be aggregated in a paint for forming the film and thus destabilizes the paint. The average particle size of the wax is more preferably 0.03 μm or more.

The average particle size is the volume-average median diameter and is determined by a laser diffraction/-scattering method. For example, the average particle size may be determined by analyzing a sample diluted with pure water using laser diffraction/scattering particle size distribution analyzer Partica (registered trademark) LA-960V2 (manufactured by HORIBA, Ltd.).

Among the polyolefin waxes, polyethylene wax is preferably used because the highest lubricating effects are obtained by the use of polyethylene wax.

The mass fraction of the wax in the film is limited to 10 mass% or more. If the fraction is less than 10 mass%, sufficient lubricating effects cannot be obtained. Particularly good lubricating effects can be obtained when the mass fraction of the wax in the film is 15 mass% or more. The mass fraction of the wax in the film is preferably less than 50 mass%. If the fraction is 50 mass% or more, the wax is detached easily due to the lack of the base resin component, and the film exhibits poor adhesion to the galvanized steel sheet and may not stay stably. Furthermore, such a steel sheet, when used for automobiles, may not be degreased sufficiently in an alkaline degreasing step during a painting process, and, in some cases, the steel sheet may not be cleaned of the film sufficiently in the alkaline degreasing step even when the organic resin that is used is alkali-soluble, and the paintability may be deteriorated by the film residues. The mass fraction of the wax in the film is more preferably 30 mass% or less.

Here, the mass fraction of the wax in the film is the ratio of the mass of the solids in the wax in the film to the total mass combining the mass of the solids in the resin in the film and the mass of the solids in the wax in the film.

Specifically, the mass fraction is measured as follows. Galvanized steel sheet test specimens having known coating weights of the resin and of the wax are prepared and analyzed with an FT-IR spectrometer to record infrared absorption spectra. Respective calibration curves of the coating weights of the resin and of the wax are prepared based on the peak intensities respectively assigned to the resin and the wax. Next, the lubricant-coated galvanized steel sheet of measuring object is analyzed to record an infrared absorption spectrum. The coating weights of the resin and of the wax are determined from the calibration curves, and the mass fraction of the wax in the film can be thus calculated.

In the present invention, the organic resin serves as a binder that holds the wax on the surface of the galvanized steel sheet. As described hereinabove, the wax and the organic resin are mixed with each other during sliding to coat the die and provide a sliding effect. An inorganic binder has low affinity for the polyolefin wax and does not produce such an effect. At least one selected from acrylic resins, epoxy resins, urethane resins, phenolic resins, vinyl acetate resins, and polyester resins can be used as the organic resin.

The acrylic resins used in the present invention are polymers or copolymers of one or more selected from unsaturated monocarboxylic acids having one carboxyl group in the molecule, such as acrylic acid and methacrylic acid, esters of the unsaturated monocarboxylic acids, and styrene; or derivatives thereof, such as sodium salts, potassium salts, ammonium salts, and amine salts.

The acrylic resins used in the present invention are those from fatty acid monomers having one carboxyl group in the molecule, or esters of such fatty acids. The paint stability may be deteriorated if the acrylic resins are from a fatty acid monomer having two or more carboxyl groups in the molecule.

Examples of the epoxy resins include, but are not particularly limited to, bisphenol A epoxy resins, bisphenol F epoxy resins, and novolac epoxy resins.

The urethane resins are not particularly limited but preferably have a carboxyl group in the molecule.

The phenolic resins are not particularly limited. Resol-type phenolic resins that are soluble or dispersible in aqueous solvents are preferable.

The vinyl acetate resins are not particularly limited. Polyvinyl acetate is preferably used.

The polyester resins are not particularly limited. Those polyester resins containing a carboxyl-containing monomer as a constituent component are preferable.

Two or more of the above resins may be used as a mixture. Furthermore, the use of an alkali-soluble organic resin allows for film removal by alkaline degreasing in the painting process and offers good paintability after the film removal.

The components used in the present invention may include a surface modifier, an antifoaming agent, and a dispersant in addition to the organic resin and the wax. Furthermore, a rust inhibitor that enhances antirust properties may be added.

In the present invention, the film described above was formed with a wide range of coating weight on the surface of galvanized steel sheets having a wide range of surface roughness, and the press formability of the galvanized steel sheets was evaluated. The present inventors have then found that good press formability is attained stably only in a region where the surface roughness of the galvanized steel sheet and the coating weight of the film satisfy a limited relationship. In general, the thickness of a lubricant film on projections of a galvanized steel sheet tends to be smaller with increasing surface roughness of the steel sheet. At the time of press forming, such thin film portions tend to be scraped off by the slide on the die to expose the underlying galvanized steel sheet, thus producing little lubricating effects. In contrast, the technique of the present invention promotes the transfer of the lubricant film component to the die during sliding and provides protection on the die to ensure that the lubricity is not impaired even in the case where the galvanized steel sheet has large roughness.

The range of the coating weight of the film that realizes good press formability is described below.

Good press formability can be obtained when the coating weight W ($g/m^2$) of the film per side and the arithmetic average roughness Ra ($\mu$m) of the surface of the metallic zinc layer satisfy a relationship of formula (1): $W \geq 0.12 \times Ra^2 + 0.1$. If $W < 0.12 \times Ra^2 + 0.1$, the coating weight of the film is insufficient, and the film cannot provide sufficient protective effects on the die side and fails to offer good press formability.

More preferably, the coating weight W ($g/m^2$) of the film per side and the arithmetic average roughness Ra ($\mu$m) of the surface of the metallic zinc layer satisfy a relationship of formula (2): $W \geq 0.25 \times Ra^2 + 0.1$.

The contribution of the film to slidability is mainly made by the film components present on projections of the galvanized steel sheet that are brought into contact with the die during press working. It is assumed that projections of the steel sheet that will be brought into contact with the die tend to be smaller in area in proportion to $Ra^2$. Thus, increasing the coating weight of the film in proportion to $Ra^2$ will ensure a sufficient amount of the film components that contribute to slidability.

The coating weight W of the film per side is preferably 2.0 $g/m^2$ or less. If the coating weight exceeds 2.0 $g/m^2$, film removability and weldability may be deteriorated. The coating weight W is particularly preferably 0.9 $g/m^2$ or less. Outstanding film removability is obtained when the coating weight W is 0.9 $g/m^2$ or less.

The coating weight may be determined by dividing the difference in weight of the galvanized steel sheet before and after the film formation by the area, or by completely removing the film from the lubricant-coated galvanized steel sheet with an aqueous alkali solution or an organic solvent and dividing the difference in weight of the galvanized steel sheet before and after the film removal by the area.

The arithmetic average roughness Ra of the surface of the metallic zinc layer is preferably 0.4 $\mu$m or more and 2.5 $\mu$m or less.

If the arithmetic average roughness Ra of the surface of the metallic zinc layer is less than 0.4 $\mu$m, minute scratches that can occur during press forming may become more noticeable, and galling may occur during press forming. If Ra exceeds 2.5 $\mu$m, a larger coating weight is required to raise the production cost and the image clearness after painting may be deteriorated.

The arithmetic average roughness Ra ($\mu$m) of the surface of the metallic zinc layer may be measured in accordance with JIS B 0633: 2001 (ISO 4288: 1996). When, for example, Ra will be greater than 0.1 and 2 or less, the arithmetic average roughness is determined from a roughness curve measured while setting the cutoff value and the reference length to 0.8 mm, and the evaluation length to 4 mm. When Ra will be more than 2 and 10 or less, the arithmetic average roughness is determined from a roughness curve measured while setting the cutoff value and the reference length to 2.5 mm, and the evaluation length to 12.5 mm.

Next, a method will be described for forming the film including the organic resin and the wax on the metallic zinc layer of the galvanized steel sheet.

The organic resin film that contains the polyolefin wax having a melting point of 120°C or above and 140°C or below and an average particle size of 3.0 $\mu$m or less is formed on top of the metallic zinc layer of the galvanized steel sheet. The organic resin may be dissolved or dispersed into a solvent, and the wax may be added to the organic resin solution or emulsion. The film may be formed by applying the resultant paint to the steel sheet surface followed by drying. Here, the paint is prepared so that C = {MB/ (MA + MB)} $\times$ 100 will be C = 10 mass% or more where MA is the mass of the solids in the organic resin and MB is the mass of the solids in the wax.

The mass fraction of the film components (the organic resin and the polyolefin wax) in the paint is preferably 1 mass% or more and 25 mass% or less.

The solvent used in the paint is water or an organic solvent.

If the mass fraction of the film components in the paint is less than 1 mass% or is more than 25 mass%, the application may produce an uneven coating. The application may be performed by any method without limitation. Examples of the application methods include the use of a roll coater or a bar coater, spraying, dipping, and brush coating. After the application, the galvanized steel sheet may be dried by a common method, for example, hot-air drying, IH heater drying, or infrared heating. The maximum temperature of the galvanized steel sheet reached during the drying is preferably 60°C or above and 140°C or below. If the maximum temperature is below 60°C, the drying may take a long time and rust inhibition may be lowered. If the maximum temperature exceeds 140°C, the wax particles are melted and combine and the coarsening of particles may deteriorate the lubricity.

In the method for producing the galvanized steel sheet of the present invention, good press formability can be obtained when the final lubricant-coated galvanized steel sheet that is produced satisfies a relationship of formula (1): $W \geq 0.12 \times Ra^2 + 0.1$ between the coating weight W (g/m$^2$) of the film per side and the arithmetic average roughness Ra ($\mu$m) of the surface of the metallic zinc layer.

In another embodiment, the production method may further include a step in which when the formula (1) is not satisfied, at least one of the coating weight W (g/m$^2$) or the arithmetic average roughness Ra ($\mu$m) of the surface of the metallic zinc layer is purposefully altered so as to satisfy the formula (1). In this manner, the production can be controlled so that lubricant-coated galvanized steel sheets having good press formability will be manufactured more reliably.

As an example, the above step may be performed during production in the following manner. A step is added in which the coating weight W (g/m$^2$) of the film per side is determined so as to satisfy the formula (1) in accordance with the target value or the measured value of the arithmetic average roughness Ra ($\mu$m) of the surface of the metallic zinc layer; and in the application step, the paint is applied in an amount controlled so that the coating weight W will be the value determined above. More specifically, the value of the arithmetic average roughness Ra (um) of the surface of the metallic zinc layer is substituted into the formula (1), and the coating weight W (g/m$^2$) of the film per side is determined so as to satisfy the substituted formula (1). Here, the phrase "the value of the arithmetic average roughness Ra (um) of the surface of the metallic zinc layer is substituted into the formula (1)" is not limited to the strict substitution into the formula (1) itself, but includes substitution into a narrower inequality that always satisfies the formula (1). The above control can correct the failure of satisfying the formula (for example, the actual failure of satisfying the formula (1) or the occurrence of a circumstance that will lead to the failure of satisfying the formula (1)) due to a significant change in the arithmetic average roughness Ra (um) of the surface of the metallic zinc layer caused by a circumstance in which, for example, galvanized steel sheets are continuously passed one after another, or the rolling rolls have been worn. The satisfaction of the formula (1) can be thus ensured.

The surface roughness of the metallic zinc layer of the lubricant-coated galvanized steel sheet may be measured before the lubricant film is formed or may be measured after the lubricant film is completely removed with an aqueous alkali solution or an organic solvent.

A known method may be adopted appropriately when the arithmetic average roughness Ra ($\mu$m) of the surface of the metallic zinc layer is controlled so as to satisfy the formula (1). When the base steel sheet under the zinc-based plating is a hot rolled steel sheet, the thickness of the scale formed during hot rolling may be controlled by controlling the amount of Si added to the steel sheet, and thereby the surface roughness of the steel sheet after being descaled by pickling may be controlled. Alternatively, the surface roughness of the steel sheet may be controlled by controlling the intensity of descaling (a process of crushing and removing the scale by water pressure) at the time of hot rolling. When the base steel sheet under the zinc-based plating is a cold rolled steel sheet, the surface roughness of the steel sheet may be controlled by altering the roll load or the roll surface roughness at the time of temper rolling. Furthermore, the surface roughness of the zinc-based plating may be controlled by altering the roll load or the roll surface roughness at the time of temper rolling of the galvanized steel sheet.

While the above embodiments have illustrated that the control is made during production so as to satisfy the formula (1), the control may be performed before the start of production as a method for determining conditions for galvanized steel sheet production in which the coating weight W (g/m$^2$) of the film per side and the arithmetic average roughness Ra ($\mu$m) of the surface of the metallic zinc layer are studied beforehand to determine whether they satisfy the formula, and a failure of satisfaction is corrected beforehand by altering any one of the coating weight W (g/m$^2$) of the film per side or the arithmetic average roughness Ra ($\mu$m) of the surface of the metallic zinc layer. This production conditions determination method may be implemented as a step constituting the method for producing the lubricant-coated galvanized steel sheet, or may be performed as an individual step.

EXAMPLES

The present invention will be described below based on EXAMPLES. The present invention is not limited to EXAMPLES below.

Galvannealed steel sheets (GA), electrogalvanized steel sheets (EG), and hot-dip galvanized steel sheets (GI) that were each 0.8 mm in thickness and had an arithmetic average roughness Ra and a metallic zinc coating weight shown in Table 1 were provided. Paints that had a composition shown in Table 2 were applied with a bar coater and were dried with an IH heater so that the maximum temperature reached by the steel sheet would be 80°C. Lubricant-treated steel sheets were thus produced. The steel sheets A to G all have a tensile strength grade of 270 MPa.

(1) Method for evaluating press formability (sliding properties)

To evaluate the press formability, the coefficient of friction of test materials was measured as follows.

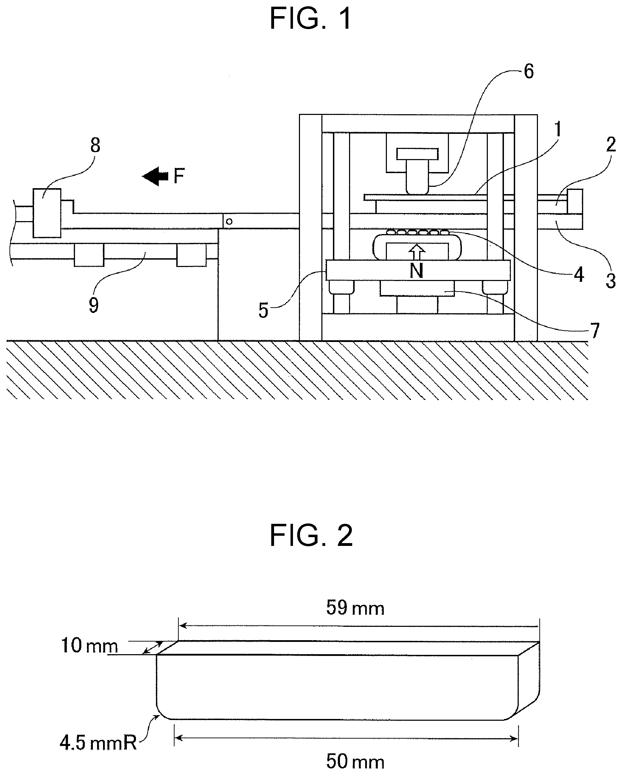

Fig. 1 is a schematic front view illustrating a friction coefficient measuring device. As illustrated in the figure, a friction coefficient measurement sample 1 taken from the test material is fixed on a sample stage 2, and the sample stage 2 is fixed on the upper face of a horizontally movable slide table 3. A vertically movable slide table support 5 is provided that has rollers 4 in contact with the lower face of the slide table 3. A first load cell 7 is attached to the slide table support 5 to serve as a pusher for the slide table support to measure the pressing load N of a bead 6 to the friction coefficient measurement sample 1. A second load cell 8 is attached to one end of the slide table 3 and is used to measure the sliding resistance force F required to move the slide table 3 in the horizontal direction under the application of the pressing force. The test was conducted after press cleaning oil PRETON (registered trademark) R352L manufactured by SUGIMURA Chemical Industrial Co., Ltd. was applied as a lubricating oil to the surface of the sample 1.

Fig. 2 is a schematic perspective view illustrating the shape and the dimensions of the bead used. The sample 1 is slid while the lower face of the bead 6 is pressed against the surface of the sample. The bead 6 illustrated in Fig. 2 is 10 mm in width and 59 mm in length in the sample sliding direction, and the lower portions at both ends in the sliding direction are curved with a curvature of 4.5 mm R. The lower face of the bead that is pushed against the sample is a flat face having a width of 10 mm and a length in the sliding direction of 50 mm.

The friction coefficient measurement test was performed using the bead illustrated in Fig. 2 with a pressing load N of 400 kgf and a sample withdrawal speed (a horizontal speed of the slide table 3) of 20 cm/min. The coefficient $\mu$ of friction between the test material and the bead was calculated by the equation: $\mu = F/N$.

The slidability was evaluated as excellent ($\circledcirc$) when the coefficient of friction was 0.125 or less, good ($\circ$) when the coefficient of friction was more than 0.125 and 0.150 or less, and insufficient ($\times$) when the coefficient of friction was more than 0.150.

(2) Method for evaluating film removability

Assuming that the lubricant-coated galvanized steel sheets according to the present invention would be used in automobile applications, the film removability at the time of degreasing was evaluated. To determine the film removability of the steel sheets, first, each test specimen was degreased with alkaline degreasing agent Fine Cleaner (registered trademark) E6403 (manufactured by Nihon Parkerizing Co., Ltd.). In this treatment, the test specimen was immersed in a degreasing liquid having a degreasing agent concentration of 20 g/L and a temperature of 40°C for a predetermined amount of time, and was rinsed in tap water. The test specimen thus treated was analyzed with a fluorescent X-ray spectrometer to measure the surface carbon intensity. The removed film ratio was calculated from the equation below using the measured value and the values measured beforehand of the surface carbon intensity before the degreasing and the surface carbon intensity of the unlubricated steel sheet.

Removed film ratio (%) = [(carbon intensity before degreasing - carbon intensity after degreasing)/(carbon intensity before degreasing - carbon intensity of unlubricated steel sheet)] $\times$ 100

The film removability of the lubricant-coated galvanized steel sheet was evaluated in accordance with the criteria below based on the immersion time in the alkaline degreasing liquid required until the removed film ratio reached 98% or more. The film removability was judged as good when the rating was $\circledcirc$ and $\circ$.

   $\circledcirc$ (very good): Within 30 seconds.
   $\circ$ (good): In more than 30 seconds and within 60 seconds.

Δ (insufficient): In more than 60 seconds and within 120 seconds.

× (poor): In more than 120 seconds.

[Table 1]

| Steel sheet | Type of galvanization | Coating weight of metallic zinc (g/m$^2$) | Ra(μm) |
|---|---|---|---|
| A | GA | 40 | 0.58 |
| B | GA | 40 | 0.81 |
| C | GA | 40 | 1.35 |
| D | GA | 40 | 2.41 |
| E | EG | 5 | 0.78 |
| F | EG | 20 | 0.78 |
| G | GI | 60 | 0.78 |

[Table 2]

| Paint No. | Organic resin | Wax | | |
| | Type | Type | Fraction of wax in film (mass%) | Average particle size (μm) | Melting point (°C) |
|---|---|---|---|---|---|
| 1 | Acrylic | Polyethylene | 20 | 0.06 | 120 |
| 2 | Acrylic | Polyethylene | 20 | 0.05 | 125 |
| 3 | Acrylic | Polyethylene | 20 | 0.3 | 125 |
| 4 | Acrylic | Polyethylene | 20 | 0.05 | 130 |
| 5 | Acrylic | Polyethylene | 20 | 0.15 | 130 |
| 6 | Acrylic | Polyethylene | 20 | 0.6 | 132 |
| 7 | Acrylic | Polyethylene | 20 | 1.0 | 132 |
| 8 | Acrylic | Polyethylene | 20 | 3.0 | 132 |
| 9 | Acrylic | Polyethylene | 20 | 0.05 | 135 |
| 10 | Acrylic | Polyethylene | 20 | 0.3 | 135 |
| 11 | Acrylic | Polyethylene | 20 | 0.06 | 140 |
| 12 | Acrylic | Polyethylene | 20 | 0.2 | 95 |
| 13 | Acrylic | Polyethylene | 20 | 0.6 | 110 |
| 14 | Acrylic | Polyethylene | 20 | 6.0 | 132 |
| 15 | Acrylic | Polypropylene | 20 | 0.03 | 146 |
| 16 | Acrylic | Polypropylene | 20 | 0.06 | 156 |
| 17 | Acrylic | PTFE | 20 | 0.25 | 340 |
| 18 | Acrylic | Polyethylene | 5 | 0.05 | 130 |
| 19 | Acrylic | Polyethylene | 10 | 0.05 | 130 |
| 20 | Acrylic | Polyethylene | 50 | 0.05 | 130 |
| 21 | Acrylic | Polyethylene | 60 | 0.05 | 130 |
| 22 | Epoxy | Polyethylene | 20 | 0.05 | 130 |
| 23 | Urethane | Polyethylene | 20 | 0.05 | 130 |
| 24 | Phenol | Polyethylene | 20 | 0.05 | 130 |
| 25 | Vinyl acetate | Polyethylene | 20 | 0.05 | 130 |

(continued)

| Paint No. | Organic resin | Wax | | | |
|---|---|---|---|---|---|
| | Type | Type | Fraction of wax in film (mass%) | Average particle size (μm) | Melting point (°C) |
| 26 | Polyester | Polyethylene | 20 | 0.05 | 130 |

[Table 3]

| No. | Steel sheet No. | Paint No. | Coating weight of film (g/m²) | Assessment of formula (1) | Assessment of formula (2) | Evaluation items | | Film removability | Remarks |
|---|---|---|---|---|---|---|---|---|---|
| | | | | | | Coefficient of friction | | | |
| | | | | | | Coefficient of friction | Rating | | |
| 1 | B | 1 | 0.90 | ○ | ○ | 0.132 | ○ | ◎ | INV. EX. |
| 2 | B | 2 | 0.90 | ○ | ○ | 0.118 | ◎ | ◎ | INV. EX. |
| 3 | B | 3 | 0.90 | ○ | ○ | 0.114 | ◎ | ◎ | INV. EX. |
| 4 | B | 4 | 0.90 | ○ | ○ | 0.114 | ◎ | ◎ | INV. EX. |
| 5 | B | 5 | 0.90 | ○ | ○ | 0.109 | ◎ | ◎ | INV. EX. |
| 6 | B | 6 | 0.90 | ○ | ○ | 0.120 | ◎ | ◎ | INV. EX. |
| 7 | B | 7 | 0.90 | ○ | ○ | 0.122 | ◎ | ◎ | INV. EX. |
| 8 | B | 8 | 0.90 | ○ | ○ | 0.129 | ○ | ◎ | INV. EX. |
| 9 | B | 9 | 0.90 | ○ | ○ | 0.115 | ◎ | ◎ | INV. EX. |
| 10 | B | 10 | 0.90 | ○ | ○ | 0.115 | ◎ | ◎ | INV. EX. |
| 11 | B | 11 | 0.90 | ○ | ○ | 0.131 | ○ | ◎ | INV. EX. |
| 12 | B | 12 | 0.90 | ○ | ○ | 0.192 | × | ◎ | COMP. EX. |
| 13 | B | 13 | 0.90 | ○ | ○ | 0.199 | × | ◎ | COMP. EX. |
| 14 | B | 13 | 1.50 | ○ | ○ | 0.162 | × | ○ | COMP. EX. |
| 15 | B | 14 | 0.90 | ○ | ○ | 0.171 | × | ◎ | COMP. EX. |
| 16 | B | 15 | 0.90 | ○ | ○ | 0.197 | × | ◎ | COMP. EX. |
| 17 | B | 16 | 0.90 | ○ | ○ | 0.201 | × | ◎ | COMP. EX. |
| 18 | B | 17 | 0.90 | ○ | ○ | 0.198 | × | ◎ | COMP. EX. |
| 19 | B | 18 | 0.90 | ○ | ○ | 0.175 | × | ◎ | COMP. EX. |
| 20 | B | 19 | 0.90 | ○ | ○ | 0.137 | ○ | ◎ | INV. EX. |
| 21 | B | 20 | 0.90 | ○ | ○ | 0.114 | ◎ | ○ | INV. EX. |
| 22 | B | 21 | 0.90 | ○ | ○ | 0.111 | ◎ | Δ | INV. EX. |
| 23 | B | 22 | 0.90 | ○ | ○ | 0.120 | ◎ | ◎ | INV. EX. |
| 24 | B | 23 | 0.90 | ○ | ○ | 0.123 | ◎ | ◎ | INV. EX. |
| 25 | B | 24 | 0.90 | ○ | ○ | 0.114 | ◎ | ◎ | INV. EX. |

(continued)

| No. | Steel sheet No. | Paint No. | Coating weight of film (g/m$^2$) | Assessment of formula (1) | Assessment of formula (2) | Evaluation items | | | Remarks |
| --- | --- | --- | --- | --- | --- | --- | --- | --- | --- |
| | | | | | | Coefficient of friction | | Film removability | |
| | | | | | | Coefficient of friction | Rating | | |
| 26 | B | 25 | 0.90 | ○ | ○ | 0.116 | ◎ | ◎ | INV. EX. |
| 27 | B | 26 | 0.90 | ○ | ○ | 0.118 | ◎ | ◎ | INV. EX. |
| 28 | B | 4 | 0.15 | × | × | 0.204 | × | ◎ | COMP. EX. |
| 29 | B | 4 | 0.25 | ○ | × | 0.135 | ○ | ◎ | INV. EX. |
| 30 | B | 4 | 0.40 | ○ | ○ | 0.114 | ◎ | ◎ | INV. EX. |
| 31 | B | 4 | 1.50 | ○ | ○ | 0.109 | ◎ | ○ | INV. EX. |
| 32 | B | 4 | 2.00 | ○ | ○ | 0.107 | ◎ | ○ | INV. EX. |
| 33 | B | 4 | 2.50 | ○ | ○ | 0.108 | ◎ | Δ | INV. EX. |
| 34 | B | - | No film | × | × | 0.210 | × | ○ | COMP. EX. |

[Table 4]

| No. | Steel sheet No. | Paint No. | Coating weight of film (g/m$^2$) | Assessment of formula (1) | Assessment of formula (2) | Evaluation items | | | Remarks |
| --- | --- | --- | --- | --- | --- | --- | --- | --- | --- |
| | | | | | | Coefficient of friction | | Film removability | |
| | | | | | | Coefficient of friction | Rating | | |
| 35 | A | 4 | 0.12 | × | × | 0.200 | × | ◎ | COMP. EX. |
| 36 | A | 4 | 0.18 | ○ | × | 0.137 | ○ | ◎ | INV. EX. |
| 37 | A | 4 | 0.30 | ○ | ○ | 0.125 | ◎ | ◎ | INV. EX. |
| 38 | A | 4 | 0.70 | ○ | ○ | 0.119 | ◎ | ◎ | INV. EX. |
| 39 | A | 4 | 1.40 | ○ | ○ | 0.115 | ◎ | ○ | INV. EX. |
| 40 | A | 4 | 2.00 | ○ | ○ | 0.113 | ◎ | ○ | INV. EX. |
| 41 | A | - | No film | × | × | 0.221 | × | ◎ | COMP. EX. |
| 42 | C | 4 | 0.30 | × | × | 0.189 | × | ◎ | COMP. EX. |
| 43 | C | 4 | 0.50 | ○ | × | 0.136 | ○ | ◎ | INV. EX. |
| 44 | C | 4 | 0.80 | ○ | ○ | 0.122 | ◎ | ◎ | INV. EX. |
| 45 | C | 4 | 1.50 | ○ | ○ | 0.114 | ◎ | ○ | INV. EX. |
| 46 | C | 4 | 2.00 | ○ | ○ | 0.113 | ◎ | ○ | INV. EX. |
| 47 | C | 4 | 3.00 | ○ | ○ | 0.112 | ◎ | Δ | INV. EX. |
| 48 | C | 13 | 0.90 | ○ | ○ | 0.164 | × | ◎ | COMP. EX. |
| 49 | C | 13 | 1.50 | ○ | ○ | 0.152 | × | ○ | COMP. EX. |
| 50 | C | - | No film | × | × | 0.205 | × | ○ | COMP. EX. |

(continued)

| No. | Steel sheet No. | Paint No. | Coating weight of film (g/m$^2$) | Assessment of formula (1) | Assessment of formula (2) | Evaluation items | | | Remarks |
| --- | --- | --- | --- | --- | --- | --- | --- | --- | --- |
| | | | | | | Coefficient of friction | | Film removability | |
| | | | | | | Coefficient of friction | Rating | | |
| 51 | D | 4 | 0.60 | × | × | 0.191 | × | ◎ | COMP. EX. |
| 52 | D | 4 | 0.90 | ○ | × | 0.138 | ○ | ◎ | INV. EX. |
| 53 | D | 4 | 1.30 | ○ | × | 0.127 | ○ | ○ | INV. EX. |
| 54 | D | 4 | 1.70 | ○ | ○ | 0.123 | ◎ | ○ | INV. EX. |
| 55 | D | 4 | 2.00 | ○ | ○ | 0.120 | ◎ | ○ | INV. EX. |
| 56 | D | 13 | 0.90 | ○ | × | 0.184 | × | ◎ | COMP. EX. |
| 57 | D | 13 | 1.50 | ○ | × | 0.181 | × | ○ | COMP. EX. |
| 58 | D | - | No film | × | × | 0.194 | × | ○ | COMP. EX. |
| 59 | E | 4 | 0.15 | × | × | 0.184 | × | ◎ | COMP. EX. |
| 60 | E | 4 | 0.25 | ○ | × | 0.131 | ○ | ◎ | INV. EX. |
| 61 | E | 4 | 0.40 | ○ | ○ | 0.101 | ◎ | ◎ | INV. EX. |
| 62 | E | 4 | 0.90 | ○ | ○ | 0.092 | ◎ | ◎ | INV. EX. |
| 63 | E | 4 | 1.20 | ○ | ○ | 0.091 | ◎ | ○ | INV. EX. |
| 64 | E | 4 | 1.70 | ○ | ○ | 0.093 | ◎ | ○ | INV. EX. |
| 65 | E | - | No film | × | × | 0.257 | × | ○ | COMP. EX. |
| 66 | F | 4 | 0.15 | × | × | 0.179 | × | ◎ | COMP. EX. |
| 67 | F | 4 | 0.25 | ○ | × | 0.127 | ○ | ◎ | INV. EX. |
| 68 | F | 4 | 0.40 | ○ | ○ | 0.100 | ◎ | ◎ | INV. EX. |
| 69 | F | 4 | 0.90 | ○ | ○ | 0.093 | ◎ | ◎ | INV. EX. |
| 70 | F | 4 | 1.20 | ○ | ○ | 0.090 | ◎ | ○ | INV. EX. |
| 71 | F | 4 | 1.70 | ○ | ○ | 0.090 | ◎ | ○ | INV. EX. |
| 72 | F | - | No film | × | × | 0.304 | × | ○ | COMP. EX. |
| 73 | G | 4 | 0.15 | × | × | 0.182 | × | ◎ | COMP. EX. |
| 74 | G | 4 | 0.25 | ○ | × | 0.132 | ○ | ◎ | INV. EX. |
| 75 | G | 4 | 0.40 | ○ | ○ | 0.105 | ◎ | ◎ | INV. EX. |
| 76 | G | 4 | 0.90 | ○ | ○ | 0.089 | ◎ | ◎ | INV. EX. |
| 77 | G | 4 | 1.20 | ○ | ○ | 0.092 | ◎ | ○ | INV. EX. |
| 78 | G | 4 | 1.70 | ○ | ○ | 0.091 | ◎ | ○ | INV. EX. |
| 79 | G | - | No film | × | × | 0.287 | × | ○ | COMP. EX. |

**EP 4 431 635 B1**

The results obtained are described in Tables 3 and 4. In the assessment of formula (1) and the assessment of formula (2) in Tables 3 and 4, o means that the formula (1) or (2) was satisfied, and × means that the formula (1) or (2) was not satisfied.

According to Tables 3 and 4, all the lubricant-coated galvanized steel sheets of INVENTIVE EXAMPLES have excellent press formability. In contrast, all the galvanized steel sheets of COMPARATIVE EXAMPLES that did not have the technical features of the present invention are poor in press formability.

Furthermore, the lubricant-coated galvanized steel sheets of the present invention clearly showed outstanding press formability when the lubricant-coated galvanized steel sheets were such that the coating weight W (g/m$^2$) of the lubricant film per side satisfied $W \geq 0.25 \times Ra^2 + 0.1$, the melting point of the wax in the lubricant film was 125°C or above and 135°C or below, and the average particle size of the wax in the lubricant film was 0.01 $\mu$m or more and 0.5 $\mu$m or less.

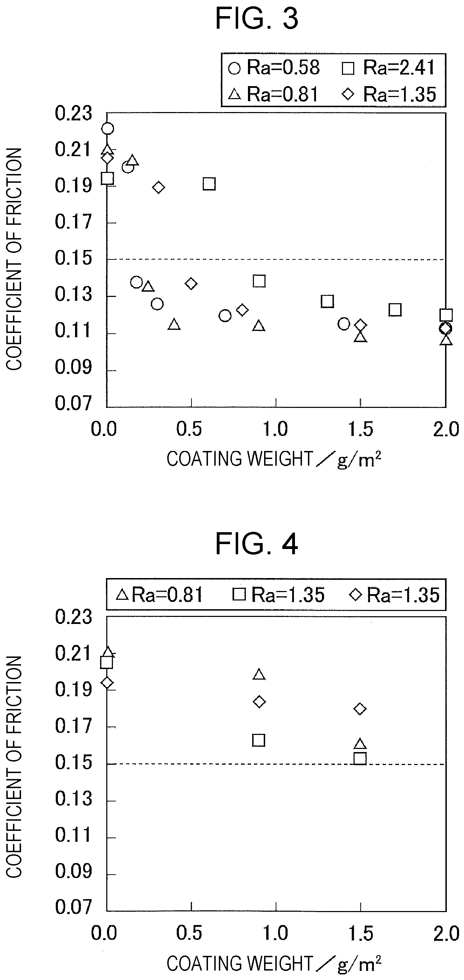

As illustrated in Fig. 4, the galvanized steel sheets treated with a paint outside the scope of the present invention tended to have a higher coefficient of friction with increasing surface roughness of the galvanized steel sheet.

In contrast, as illustrated in Fig. 3, the galvanized steel sheets that were treated with a paint falling in the scope of the present invention and satisfied the formula (1) exhibited a low coefficient of friction stably even when the surface roughness of the galvanized steel sheets changed. Therefore, good press formability was obtained stably even when a change in surface roughness occurred during production of the galvanized steel sheets.

Furthermore, the lubricant-coated galvanized steel sheets of INVENTIVE EXAMPLES had very good (◎) film removability except when the mass fraction of the wax in the film was 50% or more and/or when the coating weight W of the lubricant film per side was more than 0.9 g/m$^2$.

Industrial Applicability

The lubricant-coated galvanized steel sheet of the present invention excels in press formability and can be used in a broad range of fields mainly based on automobile bodies.

Reference Signs List

1　FRICTION COEFFICIENT MEASUREMENT SAMPLE
2　SAMPLE STAGE
3　SLIDE TABLE
4　ROLLER
5　SLIDE TABLE SUPPORT
6　BEAD
7　FIRST LOAD CELL
8　SECOND LOAD CELL
9　RAIL

**Claims**

1. A lubricant-coated galvanized steel sheet comprising, on at least one side thereof, a metallic zinc layer as a lower layer with a coating weight of 5 g/m$^2$ or more, and a film as an upper layer comprising an organic resin and a wax, wherein the organic resin is at least one selected from acrylic resins, epoxy resins, urethane resins, phenolic resins, vinyl acetate resins, and polyester resins, the wax is a polyolefin wax having a melting point of 120°C or above and 140°C or below and an average particle size of 3.0 $\mu$m or less, determined by a laser diffraction/scattering method as described in the description, the fraction of the wax in the film is 10 mass% or more, and the lubricant-coated galvanized steel sheet satisfies a relationship of formula (1) below where W is the coating weight in g/m$^2$ of the film per side and Ra is the arithmetic average roughness in $\mu$m of the surface of the metallic zinc layer,

$$W \geq 0.12 \times Ra^2 + 0.1 \cdots (1)$$

, wherein Ra is determined in accordance with JIS B 0633:2001/ISO 4288:1996 as described in the description.

2. The lubricant-coated galvanized steel sheet according to claim 1, wherein the coating weight W in g/m$^2$ of the film per side and the arithmetic average roughness Ra in $\mu$m of the surface of the metallic zinc layer, determined in accordance with JIS B 0633:2001/ISO 4288:1996 as described in the description, satisfy a relationship of formula (2) below:

14

$$W \geq 0.25 \times Ra^2 + 0.1 \quad \cdots(2).$$

3. The lubricant-coated galvanized steel sheet according to claim 1 or 2, wherein the coating weight W of the film per side is 2.0 g/m$^2$ or less.

4. The lubricant-coated galvanized steel sheet according to any one of claims 1 to 3, wherein the arithmetic average roughness Ra of the surface of the metallic zinc layer, determined in accordance with JIS B 0633:2001/ISO 4288:1996 as described in the description, is 0.4 $\mu$m or more and 2.5 $\mu$m or less.

5. The lubricant-coated galvanized steel sheet according to any one of claims 1 to 4, wherein the average particle size of the wax, determined by a laser diffraction/scattering method as described in the description, is 0.01 $\mu$m or more and 0.5 $\mu$m or less.

6. The lubricant-coated galvanized steel sheet according to any one of claims 1 to 5, wherein the fraction of the wax in the film is less than 50 mass%.

7. The lubricant-coated galvanized steel sheet according to any one of claims 3 to 6, wherein the coating weight W of the film per side is 0.9 g/m$^2$ or less.

8. The lubricant-coated galvanized steel sheet according to any one of claims 1 to 7, wherein the organic resin is an alkali-soluble resin.

9. A method for producing the lubricant-coated galvanized steel sheet described in any one of claims 1 to 8, comprising applying a paint comprising the organic resin and the wax described in any one of claims 1 to 8 to at least one side of a galvanized steel sheet, and drying the paint.

10. The method for producing the lubricant-coated galvanized steel sheet according to claim 9, wherein the maximum temperature of the steel sheet reached during the drying is 60°C or above and 140°C or below.

11. The method for producing the lubricant-coated galvanized steel sheet according to claim 9 or 10, wherein the fraction of the organic resin and the wax in the paint is 1 mass% or more and 25 mass% or less.

12. The method for producing the lubricant-coated galvanized steel sheet according to any one of claims 9 to 11, which further comprises a step in which when the formula (1) is not satisfied, at least one of the coating weight W in g/m$^2$ or the arithmetic average roughness Ra in $\mu$m of the surface of the metallic zinc layer, determined in accordance with JIS B 0633:2001/ISO 4288:1996 as described in the description, is altered so as to satisfy the formula (1).

**Patentansprüche**

1. Schmiermittelbeschichtetes verzinktes Stahlblech, umfassend auf mindestens einer Seite davon eine metallische Zinkschicht als untere Schicht mit einem Beschichtungsgewicht von 5 g/m$^2$ oder mehr und einem Film als eine obere Schicht, die ein organisches Harz und ein Wachs umfasst, wobei das organische Harz mindestens eines, ausgewählt aus Acrylharzen, Epoxidharzen, Urethanharzen, Phenolharzen, Vinylacetatharzen und Polyesterharzen, ist, das Wachs ein Polyolefinwachs mit einem Schmelzpunkt von 120°C oder höher und 140°C oder niedriger und einer durchschnittlichen Partikelgröße von 3,0 $\mu$m oder weniger, bestimmt durch ein Laserbeugungs/Streuungsverfahren wie in der Beschreibung beschrieben, ist, der Anteil des Wachses in dem Film 10 Masse-% oder mehr beträgt und das schmiermittelbeschichtete verzinkte Stahlblech eine Beziehung der nachstehenden Formel (1) erfüllt, worin W das Beschichtungsgewicht in g/m$^2$ des Films pro Seite ist und Ra die arithmetische durchschnittliche Rauheit in $\mu$m der Oberfläche der metallischen Zinkschicht ist,

$$W \geq 0,12 \times Ra^2 + 0,1 \qquad (1),$$

wobei Ra gemäß JIS B 0633:2001/ISO 4288:1996 wie in der Beschreibung beschrieben bestimmt wird.

2. Schmiermittelbeschichtetes verzinktes Stahlblech gemäß Anspruch 1, wobei das Beschichtungsgewicht W in g/m$^2$ des Films pro Seite und die arithmetische durchschnittliche Rauheit Ra in $\mu$m der Oberfläche der metallischen Zinkschicht, bestimmt gemäß JIS B 0633:2001/ISO 4288:1996 wie in der Beschreibung beschrieben, eine Beziehung der nachstehenden Formel (2) erfüllen:

$$W \geq 0{,}25 \times Ra^2 + 0{,}1 \qquad (2).$$

3. Schmiermittelbeschichtetes verzinktes Stahlblech gemäß Anspruch 1 oder 2, wobei das Beschichtungsgewicht W des Films pro Seite 2,0 g/m$^2$ oder weniger beträgt.

4. Schmiermittelbeschichtetes verzinktes Stahlblech gemäß einem der Ansprüche 1 bis 3, wobei die arithmetische durchschnittliche Rauheit Ra der Oberfläche der metallischen Zinkschicht, bestimmt gemäß JIS B 0633:2001/ISO 4288:1996 wie in der Beschreibung beschrieben, 0,4 $\mu$m oder mehr und 2,5 $\mu$m oder weniger beträgt.

5. Schmiermittelbeschichtetes verzinktes Stahlblech gemäß einem der Ansprüche 1 bis 4, wobei die durchschnittliche Partikelgröße des Wachses, bestimmt durch ein Laserbeugungs/Streuungsverfahren wie in der Beschreibung beschrieben, 0,01 $\mu$m oder mehr und 0,5 $\mu$m oder weniger beträgt.

6. Schmiermittelbeschichtetes verzinktes Stahlblech gemäß einem der Ansprüche 1 bis 5, wobei der Anteil des Wachses in dem Film weniger als 50 Masse-% beträgt.

7. Schmiermittelbeschichtetes verzinktes Stahlblech gemäß einem der Ansprüche 3 bis 6, wobei das Beschichtungsgewicht W des Films pro Seite 0,9 g/m$^2$ oder weniger beträgt.

8. Schmiermittelbeschichtetes verzinktes Stahlblech gemäß einem der Ansprüche 1 bis 7, wobei das organische Harz ein alkalilösliches Harz ist.

9. Verfahren zur Herstellung des in einem der Ansprüche 1 bis 8 beschriebenen schmiermittelbeschichteten verzinkten Stahlblechs, umfassend das Auftragen einer Farbe, die das organische Harz und den Wachs, die in einem der Ansprüche 1 bis 8 beschrieben sind, umfasst, auf mindestens einer Seite eines verzinkten Stahlblechs und das Trocknen der Farbe.

10. Verfahren zur Herstellung des schmiermittelbeschichteten verzinkten Stahlblechs gemäß Anspruch 9, wobei die maximale Temperatur des Stahlblechs, die während des Trocknens erreicht wird, 60°C oder höher und 140°C oder niedriger ist.

11. Verfahren zur Herstellung des schmiermittelbeschichteten verzinkten Stahlblechs gemäß Anspruch 9 oder 10, wobei der Anteil des organischen Harzes und des Wachses in der Farbe 1 Masse-% oder mehr und 25 Masse-% oder weniger beträgt.

12. Verfahren zur Herstellung des schmiermittelbeschichteten verzinkten Stahlblechs gemäß einem der Ansprüche 9 bis 11, das ferner einen Schritt umfasst, in dem, wenn die Formel (1) nicht erfüllt ist, mindestens eines von dem Beschichtungsgewicht W in g/m$^2$ und der arithmetischen durchschnittlichen Rauheit Ra in $\mu$m der Oberfläche der metallischen Zinkschicht, bestimmt gemäß JIS B 0633:2001/ISO 4288:1996 wie in der Beschreibung beschrieben, so geändert wird, dass die Formel (1) erfüllt wird.

**Revendications**

1. Feuille d'acier plaquée de zinc revêtue de film lubrifiant comprenant, sur au moins une face de celle-ci, une couche de zinc métallique en tant que couche inférieure ayant une masse de revêtement de 5 g/m$^2$ ou plus, et un film en tant que couche supérieure comprenant une résine organique et une cire, dans laquelle la résine organique est au moins une résine choisie parmi des résines acryliques, des résines époxy, des résines uréthane, des résines phénoliques, des résines d'acétate de vinyle et des résines polyester, la cire est une cire de polyoléfine présentant un point de fusion de 120 °C ou plus et 140 °C ou moins et une taille moyenne de particules de 3,0 $\mu$m ou moins, déterminée par une méthode de diffraction/diffusion laser telle que décrite dans la description, la fraction de la cire dans le film est de 10 % massique ou plus, et la feuille d'acier plaquée de zinc revêtue de film lubrifiant satisfait une relation de la formule (1) ci-dessous où W est la masse de revêtement en g/m$^2$ du film par face et Ra est la rugosité moyenne arithmétique en $\mu$m de la surface de la couche de zinc métallique,

$$W \geq 0,12 \times Ra^2 + 0,1...(1),$$

dans laquelle Ra est déterminée conformément à la norme JIS B 0633:2001/ISO 4288:1996 telle que décrite dans la description.

2. Feuille d'acier plaquée de zinc revêtue de film lubrifiant selon la revendication 1, dans laquelle la masse de revêtement W en g/m² du film par face et la rugosité moyenne arithmétique Ra en μm de la surface de la couche de zinc métallique, déterminée conformément à la norme JIS B 0633:2001/ISO 4288:1996 telle que décrite dans la description, satisfont une relation de la formule (2) ci-dessous :

$$W \geq 0,25 \times Ra^2 + 0,1...(2).$$

3. Feuille d'acier plaquée de zinc revêtue de film lubrifiant selon la revendication 1 ou la revendication 2, dans laquelle la masse de revêtement W du film par face est de 2,0 g/m² ou moins.

4. Feuille d'acier plaquée de zinc revêtue de film lubrifiant selon l'une quelconque des revendications 1 à 3, dans laquelle la rugosité moyenne arithmétique Ra de la surface de la couche de zinc métallique, déterminée conformément à la norme JIS B 0633:2001/ISO 4288:1996 telle que décrite dans la description, est de 0,4 μm ou plus et 2,5 μm ou moins.

5. Feuille d'acier plaquée de zinc revêtue de film lubrifiant selon l'une quelconque des revendications 1 à 4, dans laquelle la taille moyenne de particules de la cire, déterminée par une méthode de diffraction/diffusion laser telle que décrite dans la description, est de 0,01 μm ou plus et 0,5 μm ou moins.

6. Feuille d'acier plaquée de zinc revêtue de film lubrifiant selon l'une quelconque des revendications 1 à 5, dans laquelle la fraction de la cire dans le film est inférieure à 50 % massique.

7. Feuille d'acier plaquée de zinc revêtue de film lubrifiant selon l'une quelconque des revendications 3 à 6, dans laquelle la masse de revêtement W du film par face est de 0,9 g/m² ou moins.

8. Feuille d'acier plaquée de zinc revêtue de film lubrifiant selon l'une quelconque des revendications 1 à 7, dans laquelle la résine organique est une résine soluble dans un alcali.

9. Procédé de production de la feuille d'acier plaquée de zinc revêtue de film lubrifiant décrite selon l'une quelconque des revendications 1 à 8, comprenant l'étape d'application d'une peinture comprenant la résine organique et la cire décrites selon l'une quelconque des revendications 1 à 8 sur au moins une face d'une feuille d'acier plaquée de zinc, et pour sécher la peinture.

10. Procédé de production de la feuille d'acier plaquée de zinc revêtue de film lubrifiant selon la revendication 9, dans lequel la température maximale de la feuille d'acier atteinte pendant le séchage est de 60 °C ou plus et 140 °C ou moins.

11. Procédé de production de la feuille d'acier plaquée de zinc revêtue de film lubrifiant selon la revendication 9 ou la revendication 10, dans lequel la fraction de la résine organique et de la cire dans la peinture est de 1 % massique ou plus et 25 % massique ou moins.

12. Procédé de production de la feuille d'acier plaquée de zinc revêtue de film lubrifiant selon l'une quelconque des revendications 9 à 11, qui comprend en outre une étape dans laquelle, lorsque la formule (1) n'est pas satisfaite, au moins un élément parmi la masse de revêtement W en g/m² ou la rugosité moyenne arithmétique Ra en μm de la surface de la couche de zinc métallique, déterminée conformément à la norme JIS B 0633 :2001/ISO 4288:1996 telle que décrite dans la description, est modifié de manière à satisfaire la formule (1).

# FIG. 1

# FIG. 2

## FIG. 3

## FIG. 4

**REFERENCES CITED IN THE DESCRIPTION**

**Patent documents cited in the description**

- JP 10052881 A
- JP 2000309747 A
- JP 2000167981 A
- US 2014023879 A1